# EUROPEAN PATENT APPLICATION

(11) **EP 4 797 043 A1**
(43) Date of publication of application: **26.08.2026**
(21) Application number: 26158966.7
(22) Date of filing: 17.02.2026
(51) Int. Cl.: G06F 1/16, G06F 1/20, H01Q 1/02, H04N 5/64, H04N 21/426, H05K 7/20

(54) **CONTROL BOX AND DISPLAY DEVICE INCLUDING THE SAME**

(30) Priority: 21.02.2025 KR 20250022820; 11.06.2025 KR 20250076567
(71) Applicant: LG Electronics Inc., Yeongdeungpo-gu Seoul 07336 (KR)
(72) Inventor: PYO, Jonggil, Seoul (KR); LEE, Gihyung, Seoul (KR)
(74) Representative: Schott, Jakob Valentin

(57) **Abstract**

A control box and a display device including the control box are disclosed. The control box includes a case, a plate disposed in the case, a wheel comprising an inner gear and rotatably mounted on the plate, an antenna mount including an antenna and fixed to the wheel so as to be rotated together with the wheel, and a motor comprising a drive gear engaged with the inner gear of the wheel.

## Description

### CROSS-REFERENCE TO RELATED APPLICATION

This application claims the priority benefit of Korean Patent Applications No. 10-2025-0022820, filed on February 21, 2025 and No. 10-2025-0076567, filed on June 11, 2025 in the Korean Intellectual Property Office, the disclosure of which is incorporated herein by reference.

### BACKGROUND OF THE DISCLOSURE

### 1. Field of the disclosure

The present disclosure relates to a control box and a display device including the same.

### 2. Description of the Related Art

With the development of the information society, demand for various kinds of display devices is increasing. In response to this demand, various kinds of display devices, such as LCDs (Liquid Crystal Displays), OLEDs (Organic Light-Emitting Diodes), and micro-LEDs have recently been researched and used.

Thereamong, an LCD panel includes a TFT substrate and a color substrate facing each other with a liquid crystal layer interposed therebetween, and is configured to display an image using light provided from a backlight unit. In addition, an OLED panel is manufactured by depositing an organic material layer capable of self-emission on a substrate on which a transparent electrode is formed in order to display an image. In particular, a display device including an OLED panel has an advantage in that it can be implemented in an ultra-thin form since a backlight unit is not required.

A control box may be spaced apart from the display device and disposed in proximity to a user during use. The control box may provide various types of information to the display device. For example, the control box may be an AV box. The control box may transmit and receive information to and from a display head including a display panel for displaying images, via wired and/or wireless communication.

Recently, extensive research has been conducted on connectivity structures of such display devices.

### SUMMARY OF THE DISCLOSURE

It is an object of the present disclosure to solve the above and other problems.

It is another object of the present disclosure to provide a control box including a wireless communication module.

It is another object of the present disclosure to provide a control box capable of automatically adjusting direction of the wireless communication module.

It is another object of the present disclosure to provide a control box capable of improving the reception rate of the antenna of the wireless communication module.

It is another object of the present disclosure to provide a mechanism for rotation of the wireless communication module.

It is another object of the present disclosure to provide a mechanism configured to limit a rotational range of the wireless communication module.

It is another object of the present disclosure to provide a control box configured to improve radiation efficiency of the wireless communication module.

It is another object of the present disclosure to efficiently improve an air flow structure in the control box.

It is another object of the present disclosure to improve drive stability of a rotating mechanism of the wireless communication module.

In order to accomplish the above objects, a control box according to one aspect of the present disclosure may include a case, a plate disposed in the case, a wheel including an inner gear and rotatably mounted on the plate, an antenna mount including an antenna and fixed to the wheel so as to be rotated together with the wheel, and a motor including a drive gear engaged with the inner gear of the wheel.

In order to accomplish the above objects, a display device according to another aspect of the present disclosure includes a display head, which includes a display panel configured to display an image and a communication module, and a control box including an antenna configured to perform wireless communication with the communication module.

### BRIEF DESCRIPTION OF THE DRAWINGS

The above and other objects, features and other advantages of the present disclosure will be more clearly understood from the following detailed description taken in conjunction with the accompanying drawings, in which:

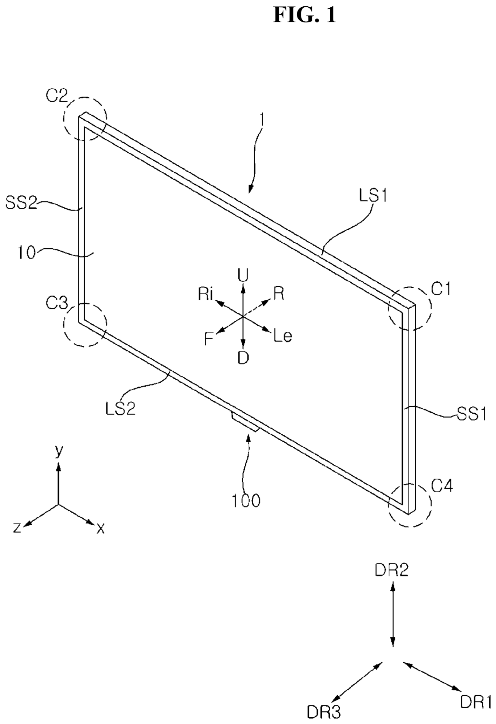

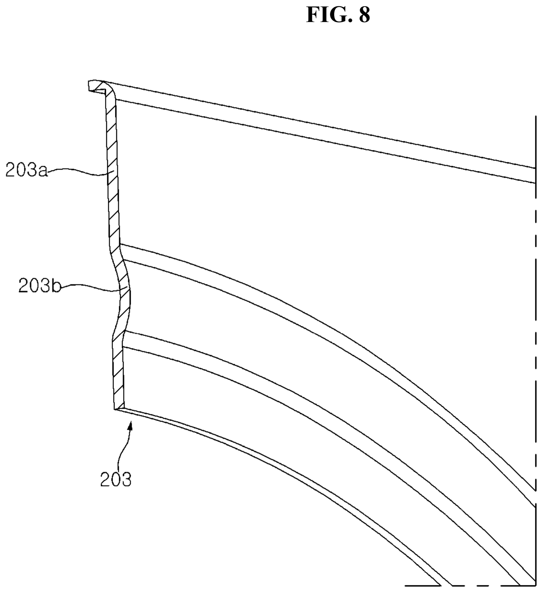

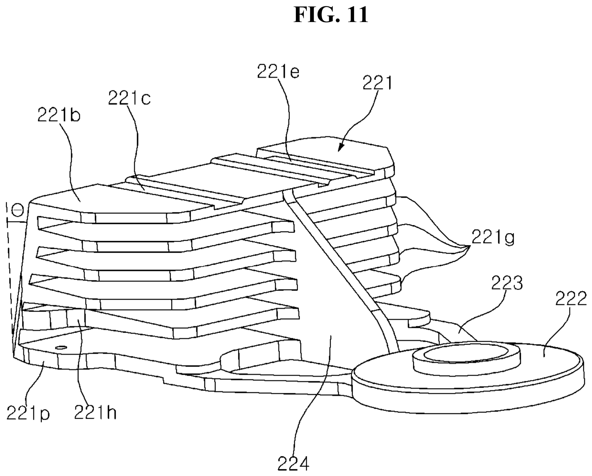

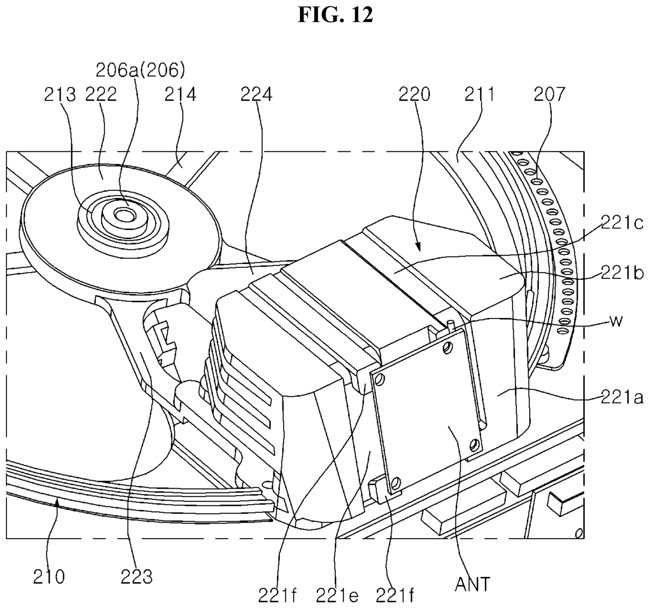

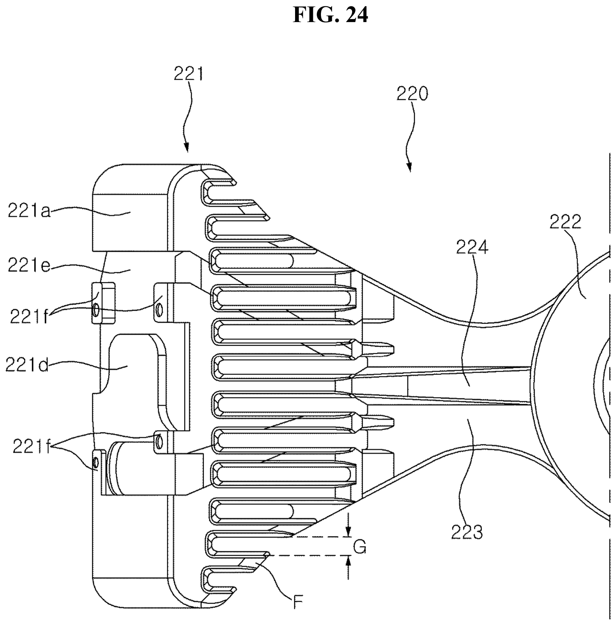

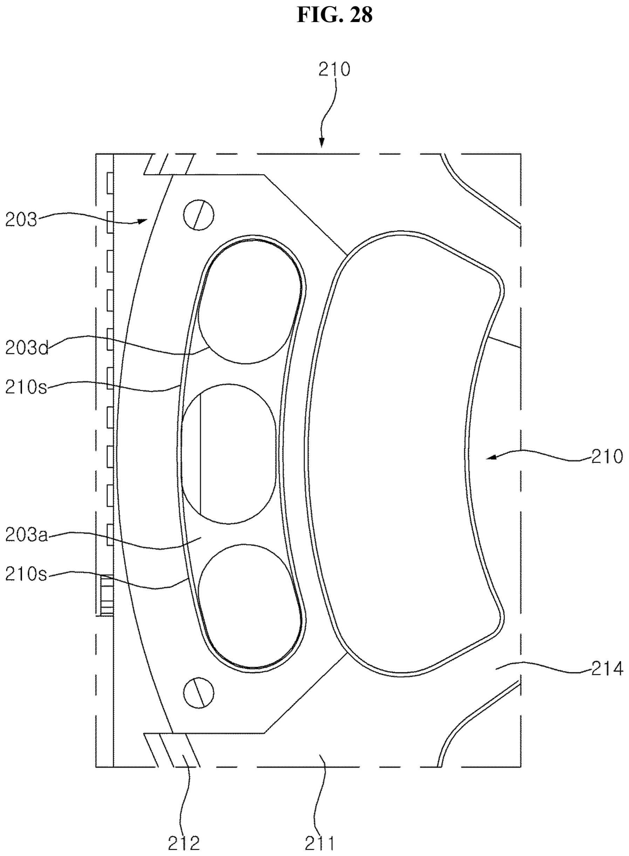

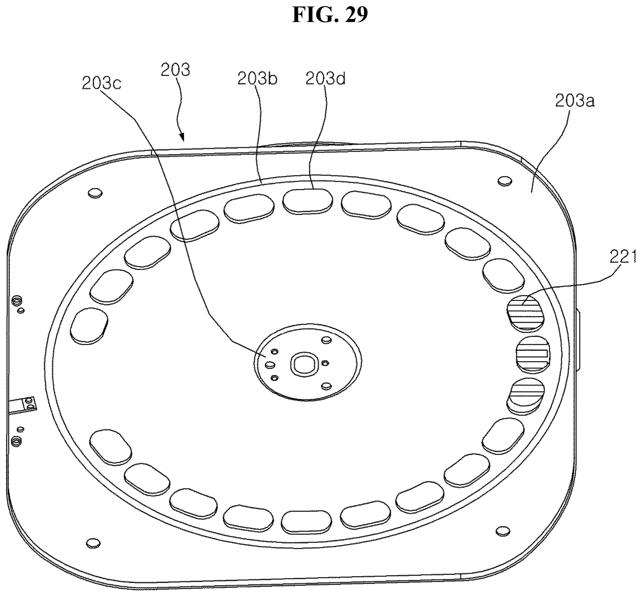

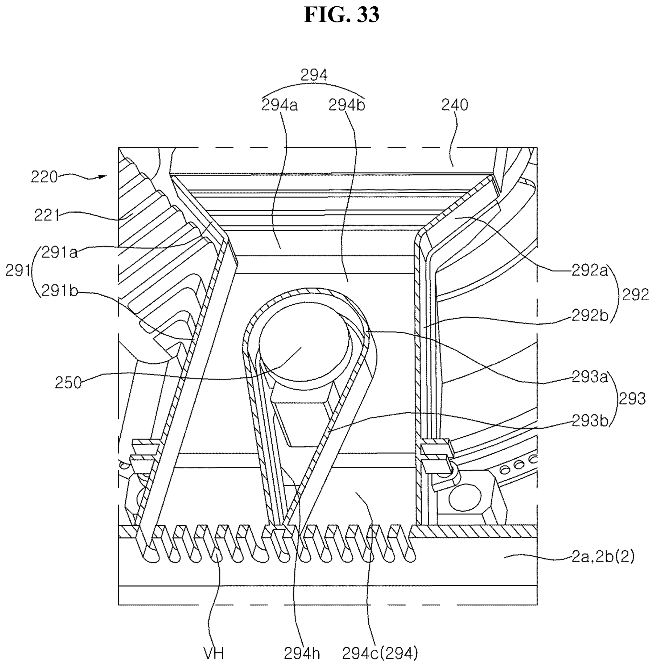

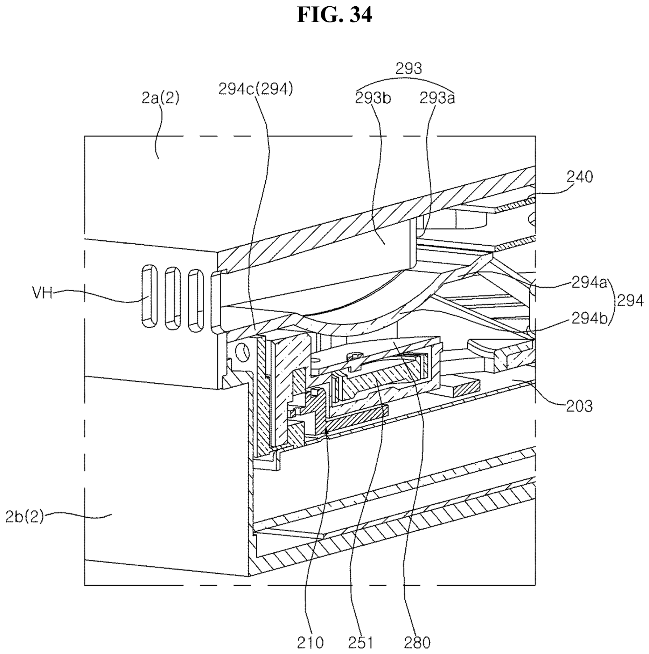

FIGS. 1 to 34 are views illustrating a control box and a display device including the control box according to embodiments of the present disclosure.

### DETAILED DESCRIPTION OF THE PREFERRED EMBODIMENTS

A description will now be given in detail according to exemplary embodiments disclosed herein, with reference to the accompanying drawings. For the sake of brevity of description with reference to the drawings, the same or equivalent components are denoted by the same reference numbers, and a description thereof will not be repeated.

In general, suffixes such as "module" and "unit" may be used to refer to elements or components. The use of such suffixes herein is merely intended to facilitate description of the specification, and the suffixes do not have any special meaning or function.

In the present disclosure, that which is well known to one of ordinary skill in the relevant art has generally been omitted for the sake of brevity. The accompanying drawings are used to facilitate understanding of various technical features, and it should be understood that the embodiments presented herein are not limited by the accompanying drawings. As such, the present disclosure should be construed to extend to any alterations, equivalents and substitutes, in addition to those that are particularly set out in the accompanying drawings.

It is to be understood that, although the terms "first," "second," etc. may be used herein to describe various elements, these elements should not be limited by these terms. These terms are only used to distinguish one element from another.

It will be understood that when an element is referred to as being "connected to" another element, intervening elements may be present. In contrast, it will be understood that when an element is referred to as being "directly connected to" another element, there are no intervening elements present.

A singular representation may include a plural representation unless the context clearly indicates otherwise.

In the present disclosure, it should be understood that the terms "comprises," "includes," "has," etc. specify the presence of features, numbers, steps, operations, elements, components, or combinations thereof described in the specification, but do not preclude the presence or addition of one or more other features, numbers, steps, operations, elements, components, or combinations thereof.

Indication of directions of upward U, downward D, leftward Le, rightward Ri, forward F, and rearward R is merely for convenience of description, and the technical idea disclosed in the present disclosure is not limited thereto.

Referring to FIG. 1, the display device 1 may include a display 10. The display 10 may display an image on the front surface thereof.

The display device 1 may include a first long side LS1, a second long side LS2 opposed to the first long side LS1, a first short side SS1 adjacent to the first long side LS1 and the second long side LS2, and a second short side SS2 opposed to the first short side SS1. Although each of the first and second long sides LS1 and LS2 is illustrated and described as being longer than each of the first and second short sides SS1 and SS2 for convenience of explanation, the length of each of the first and second long sides LS1 and LS2 may be almost equal to that of each of the first and second short sides SS1 and SS2.

A direction parallel to the first and second long sides LS1 and LS2 of the display device 1 may be referred to as a lateral direction or a first direction DR1. A direction parallel to the first and second short sides SS1 and SS2 of the display device 1 may be referred to as a vertical direction or a second direction DR2. A direction perpendicular to the first and second long sides LS1 and LS2 and the first and second short sides SS1 and SS2 of the display device 1 may be referred to as a forward/backward direction or a third direction DR3.

A direction in which the display panel 10 displays an image may be referred to as forward F or z, and the opposite direction may be referred to as rearward R or -z. The first long side LS1 may be referred to as an upper side U or y, and the second long side LS2 may be referred to as a lower side D or -y. The first short side SS1 may be referred to as a left side Le or x, and the second short side SS2 may be referred to as a right side Ri or -x.

The first long side LS1, the second long side LS2, the first short side SS1 and the second short side SS2 may be referred to as an edge of the display device 1. The points at the first long side LS1, the second long side LS2, the first short side SS1 and the second short side SS2 meet each other may be referred to as corners.

For example, the point at which the first short side SS1 and the first long side LS1 meet each other may be referred to as a first corner C1. The point at which the first long side LS1 and the second short side SS2 meet each other may be referred to as a second corner C2. The point at which the second short side SS2 and the second long side LS2 meet each other may be referred to as a third corner C3. The point at which the second long side LS2 and the first short side SS1 meet each other may be referred to as a fourth corner C4.

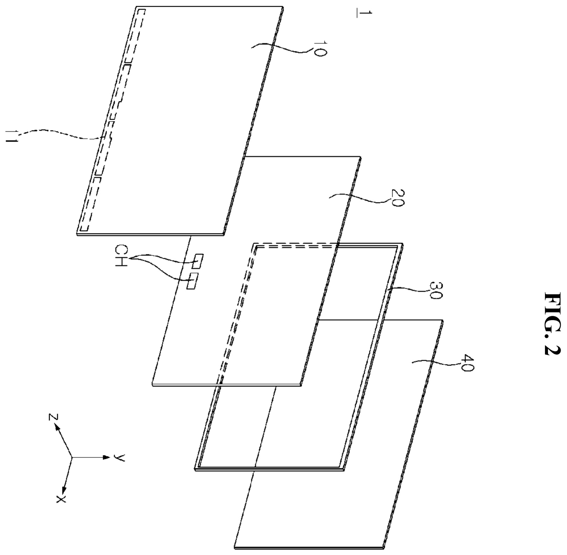

Referring to FIGs. 1 and 2, the display device 1 may include a display panel 10, a frame 20, a side frame 30, and a back cover 40.

The display panel 10 may define the front surface of the display device 1 and may display images in a forward direction. For example, the display panel 10 may be an organic light emitting diode (OLED). However, the display panels applicable to the present disclosure are not limited to the OLED panel. The display panel 10 may divide an image into a plurality of pixels, and may control the color, brightness and chroma of each of the pixels, thereby outputting the image. The display panel 10 may be divided into an active area, in which an image is displayed, and an inactive area, in which an image is not displayed. The display panel 10 may generate light corresponding to red, green or blue in response to a control signal.

The frame 20 may be positioned behind the display panel 10, and the display panel 10 may be coupled to the frame 20. For example, the frame 20 may include a metal material. A cable hole CH may be formed through the frame 20. Here, the frame 20 may be referred to as a main frame, a module cover, a rear frame 20, or a rear cover 20.

The side frame 30 may extend along the periphery of the frame 20. The frame 20 may be coupled to the side frame 30 from the front or rear. The side frame 30 may cover side surfaces of the display panel 10 and the frame 20. Here, the side frame 30 may be referred to as a guide panel.

The back cover 40 may be positioned behind the frame 20, and may be coupled to the frame 20. For example, the back cover 40 may be made of a resin material through injection molding. Alternatively, the back cover 40 may include a metal material.

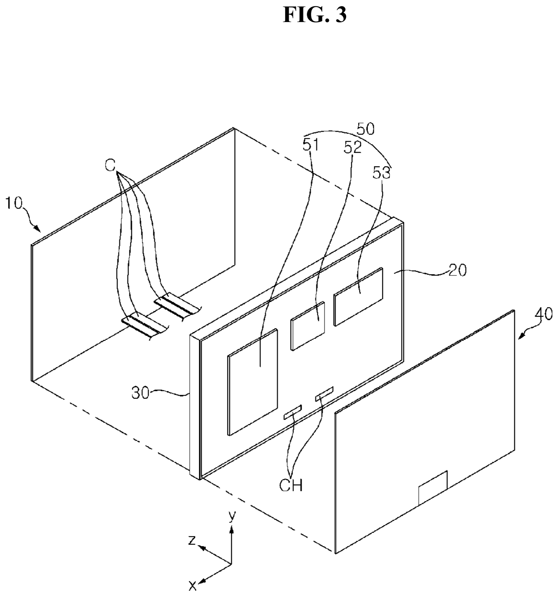

Referring to FIG. 3, boards 50 may be mounted on the frame 20 from the rear side of the frame 20. A plurality of electronic elements may be surface-mounted on the boards 50. The boards 50 may be printed circuit boards (PCBs), and may be electrically connected to electronic components of the display device.

For example, the boards 50 may include a power supply board 51 configured to supply power to the components of the display device, a timing controller board 52 configured to supply an image signal to the display panel 10, and a main board 53 configured to supply an image signal to the display panel 10 and/or the timing controller board 52 and to control the display device.

A source PCB (S-PCB) 11 (see FIG. 2) may be positioned adjacent to the lower side of the display panel 10, and may be coupled to the rear surface of the display panel 10. A cable C may extend through the cable hole CH formed through a lower portion of the frame 20, and may connect the S-PCB 11 to the timing controller board 52. Accordingly, the cable C may transmit digital video data and a timing control signal to the S-PCB 11 from the timing controller board 52. For example, the cable C may be a flexible flat cable (FFC).

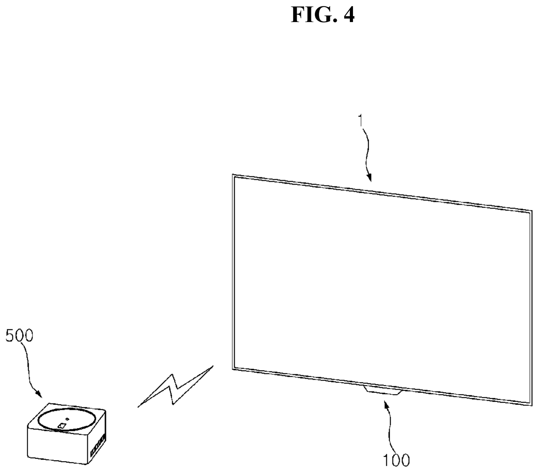

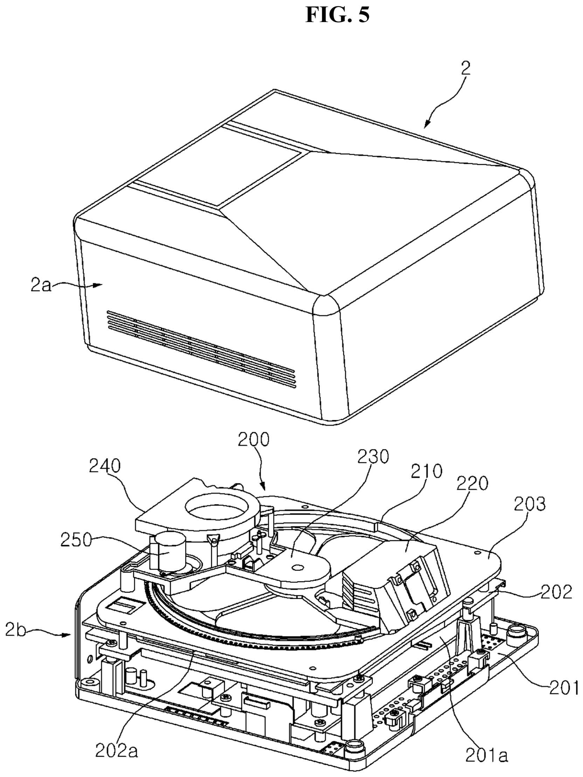

Referring to FIG. 4, a control box 2 may be spaced apart from the display device 1. The control box 2 may be referred to as a set-top box. The control box 2 may send and receive information to and from the display device 1 in a wireless manner. A communication module 200 (see FIG. 5) of the control box 2 may perform wireless communication with respect to a communication module 100 of the display device 1. At least a portion of the communication module 100 may project from the edge of the display device 1. Consequently, the communication module 100 may perform smooth wireless communication with the communication module 200 (see FIG. 5) of the control box 2.

The stability of wireless communication between the control box 2 and the display device 1 may vary according to the relative position between the control box 2 and the display device 1. The display device 1 may be held at a fixed position in order to maintain a constant distance from a user. There is a need to allow the control box 2 to be freely positioned for user convenience.

The control box 2 may be a component of the display device 1. Here, the display device 1 including the display panel 10 may be referred to as a head 1 or a display head 1.

Referring to FIG. 5, the control box 2 may include a lower case 2b and an upper case 2a. The lower case 2b may include a first plate 201, a second plate 202, and a third plate 203. The first plate 201 may define the bottom of the lower case 2b. The second plate 202 may be positioned above the first plate 201. The second plate 202 may be spaced apart from the first plate 201. The third plate 203 may be positioned above the second plate 202. The upper case 2a may cover the second plate 202 and the third plate 203, and may be coupled to first plate 201. The upper case 2a may be positioned on the lower case 2b, and may be coupled to the lower case 2b. For example, the plates 201, 202 and 203 may each contain metal.

A first control board 201a may be mounted on the first plate 201 between the first plate 201 and the second plate 202. For example, the first control board 201a may be a power supply unit.

A second control board 202a may be mounted on the second plate 202 between the second plate 202 and the third plate 203. For example, the second control board 202a may be a main board.

The communication module 200 may be positioned on the third plate 203. The communication module 200 may be referred to as a wireless communication module 200, an antenna drive module 200, or a rotational module 200. The upper case 2a may cover the communication module 200. For example, the upper case 2a may be made of a synthetic resin. Alternatively, the upper case 2a may be made of an ABS resin.

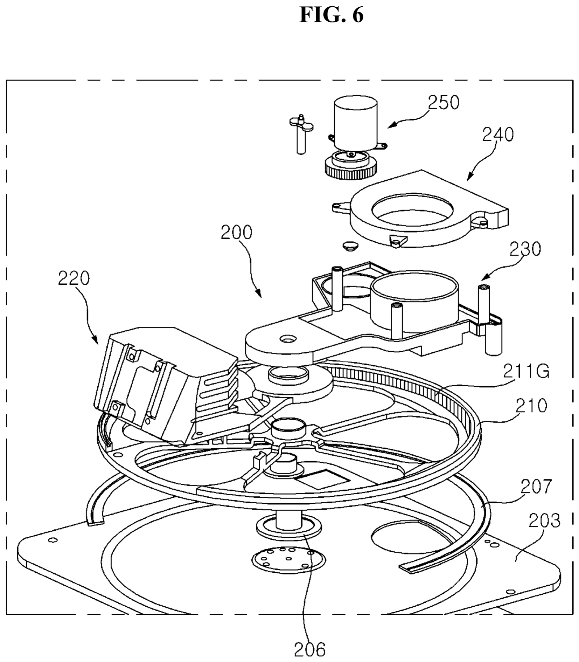

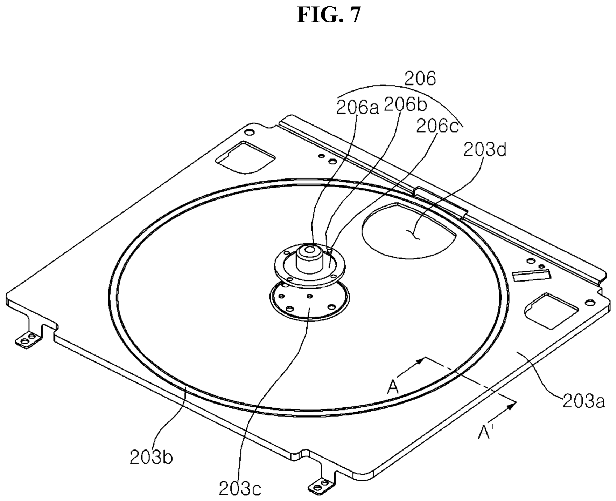

Referring to FIGs. 6 to 8, FIG. 8 illustrates an example of the section taken along line A-A' in FIG. 7. The third plate 203 may include a base 203a, an outer rim 203b, and a stage 203c. The base 203a may form the flat plate of the third plate 203. The outer rim 203b may be a circle projecting from the upper surface of the base 203a. The stage 203c may project from the upper surface of the base 203a, and may be positioned in the center of the outer rim 203b. The stage 203c and/or the outer rim 203b may be formed by pressing the base 203a.

A center pole 206 may be mounted or fixed to the stage 203c. The center pole 206 may include a pole base 206c, an inner rim 206b, and a pole fixer 206a. The pole base 206c may have the shape of a circular plate corresponding to the stage 203c. The pole base 206c may be fixed to the stage 203c. The inner rim 206b may project from the upper surface of the pole base 206c. The pole fixer 206a may be positioned in the center of the inner rim 206b.

An opening 203d may be in the base 203a of the third plate 203. The opening 203d may be formed through the base 203a of the third plate 203. The opening 203d may be positioned between the outer rim 203b and the inner rim 206b. The opening 203d may be referred to as a flow path 203d or a ventilation hole 203d.

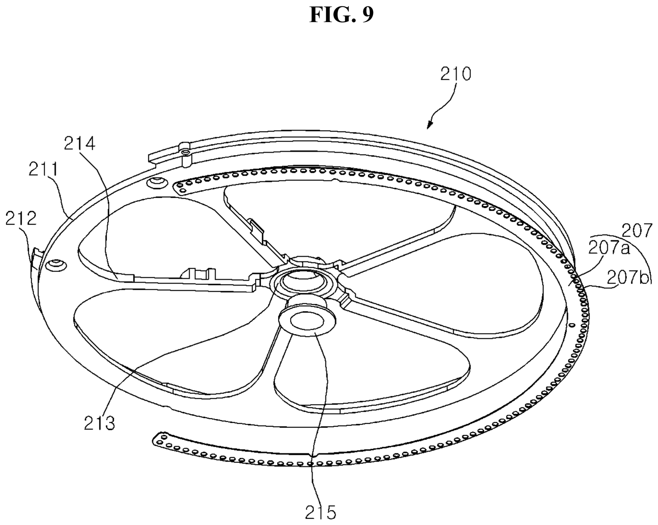

Referring to FIG. 9 together with FIG. 6, a wheel 210 may include a drive rim 211, a hub 213, and a spoke 214. The drive rim 211 may be a circular ring. The drive rim 211 may be provided on the inner surface thereof with an inner gear 211G.

The hub 213 may be positioned in the center of the drive rim 211. A hub bearing 215 may be mounted on the hub 213. The spoke 214 may connect the hub 213 to the drive rim 211. The spoke 214 may include a plurality of spokes. Each of the plurality of spokes 214 may connect the hub to the drive rim 211. For example, the number of spokes 214 may be five.

A flange support 212 may be formed at the drive rim 211. The flange support 212 may be formed at a portion of the circumference of the drive rim 211. For example, the flange support 212 may have a fan shape having an included angle of 290 degrees or less. The flange support 212 may be formed on the outer circumferential surface of the drive rim 211 so as to project therefrom.

A rotational indicator 207 may have a shape corresponding to the flange support 212. The rotational indicator 207 may be coupled or fixed to the flange support 212. The rotational indicator 207 may include a curved plate 207a and holes 207b. The holes 207b may be spaced apart from each other at regular distances, and may be sequentially arranged in the circumferential direction of the curved plate 207a.

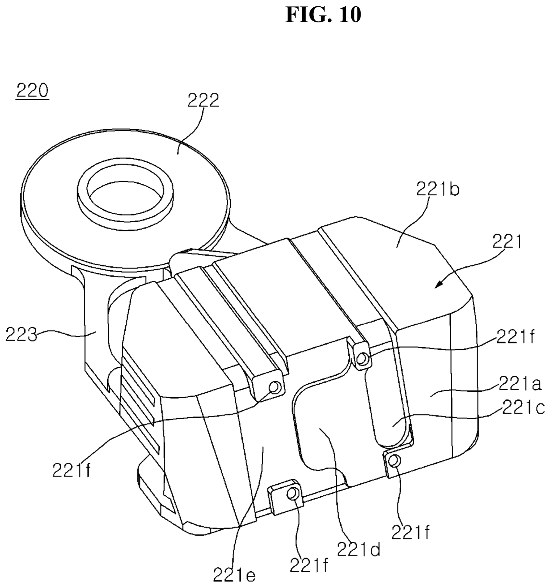

Referring to FIGs. 10 to 12, an antenna mount 220 may include a mount head 221, a mount hub 222, and a bridge 223. The pole 206a of the center pole 206 and/or the hub 213 of the wheel 210 may be inserted into the mount hub 222.

A bridge 223 may connect the mount head 221 to the mount hub 222. The bridge 223 may include a plurality of bridges 223. For example, a pair of bridges 223 may extend from opposite sides of the mount head 221, and may be connected to the mount hub 222. The bridge 223 may further include a center support 224. The center support 224 may be positioned between the plurality of bridges 223. The center support 224 may connect the mount hub 222 to the mount head 221. The center support 224 may form a vertical wall. The center support 224 and/or the bridge 223 may stably connect the mount hub 222 to the mount head 221.

The mount head 221 may include a front part 221a, an upper part, a lower part 221p, and a radiator part 221g. The lower part 221p may define the bottom of the mount head 221. The lower part 221p may be parallel to the mount hub 222 and/or the bridge 223. The lower part 221p may be positioned opposite the mount hub 222 based on the bridge 223. The front part 221a may be inclined with respect to the lower part 221p. The front part 221a may define a predetermined angle Θ with respect to a plane perpendicular to the lower part 221p. The predetermined angle Θ may be an angle of 20 degrees to 30 degrees. The upper part 221b may be connected to the upper end of the front part 221a. The upper part 221b may face the lower part 221p.

The radiator part 221g may be a plurality of fins. The radiator part 221g may be positioned behind the front part 221a between the lower part 221p and the upper part 221b. The radiator part 221g may extend from the rear surface of the front part 221a. For example, the radiator part 221g composed of a plurality of fins, which are spaced apart from each other. The radiator part 221g may be air cooled to dissipate heat transferred from the front part 221a. At least one of the plurality of fins, which constitute the radiator part 221g, may include a cutout part 221h. The cutout part 221h may be formed in a fin among the plurality of fins near the lower part 221p.

A coupler 221f may be formed at the front part 221a. The coupler 221f may include a plurality of couplers, each of which is disposed at the apexes of a quadrilateral or trapezoid on the front part 221a. A heatsink 221d may be positioned between the plurality of couplers 221f. The heatsink 221d may be lowered from the plurality of couplers 221f so as to define a height difference therebetween.

A first trench 221c may be lowered from the outer surface of the front part 221a and/or the outer surface of the upper part 221b so as to define a height difference therebetween, and may extend toward the upper part 221b from the front part 221a. The first trench 221c may be lowered from the heatsink 221d so as to define a height difference therebetween.

A second trench 221e may be lowered from the front part 221a and/or the upper part 221b so as to define a height difference therebetween. The second trench 221e may be positioned around the heatsink 221d and be lowered from the heatsink 221d. The second trench 221e may be formed in the front part 221a and the upper part 221b.

An antenna ANT may be coupled or fixed to the coupler 221f. The rear surface of the antenna ANT may face the heatsink 221d. The heat generated by the antenna ANT may be transferred to the heatsink 221d. The radiator part 221g may be air cooled to dissipate the heat transferred thereto from the heatsink 221d. An electrical wire W connected to the antenna ANT may be disposed in the first trench 221c and/or the second trench 221e.

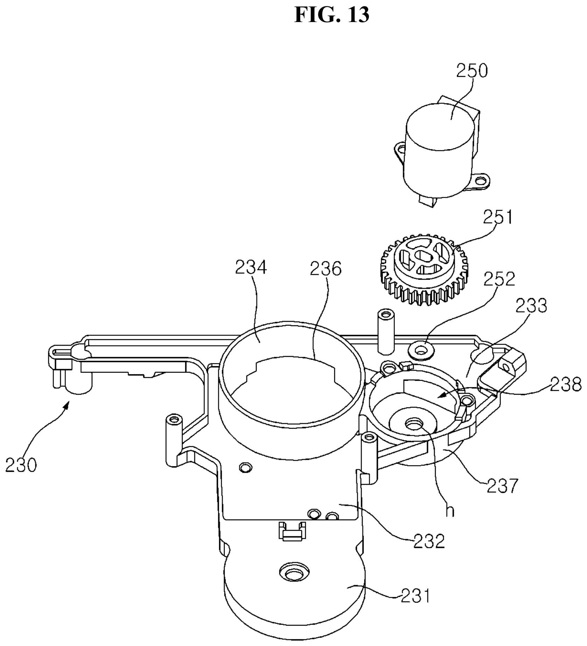

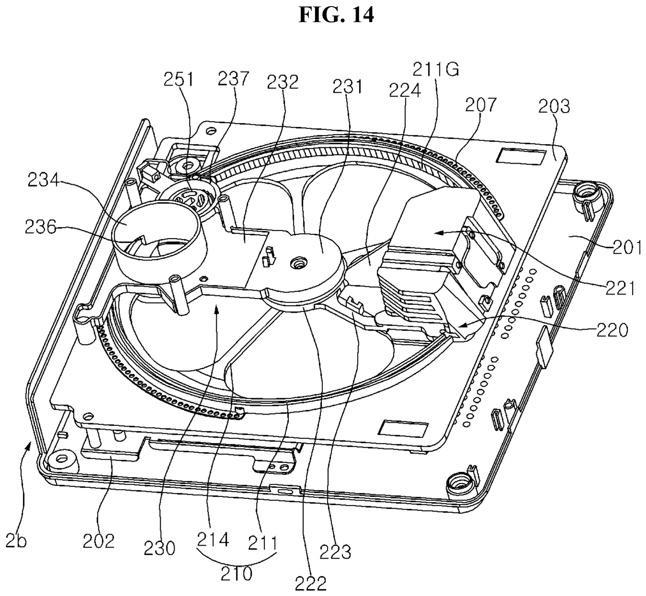

Referring to FIGs. 13 and 14, a drive module 230, 250 and 251 may include a module bracket 230, a motor 250, and a drive gear 251. The module bracket 230 may include a hub cover 231. The hub cover 231 may cover the mount hub 222 of the antenna mount 220. The mount hub 222 may rotate at the hub cover 231. The module bracket 230 may include a spoke cover 232. The spoke cover 232 may cover one of the spokes 214 of the wheel 210. The spoke cover 232 may be connected to the hub cover 231.

The module bracket 230 may include a duct 234. The duct 234 may have the form of a cylinder. The duct 234 may be positioned opposite the hub cover 231 based on the spoke cover 232. The duct 234 may be aligned with the opening 203d (see FIG. 7) in the third plate 203 (see FIG. 7). The duct 234 may include a side opening 236. The side opening 236 may be formed in a lower portion of a side surface of the duct 234. The inner gear 211G of the drive rim 211 may be exposed to the inner side of the duct 234 through the side opening 236.

A side bracket 233 may extend from the spoke cover 232 and/or the duct 234. A gear housing 237 may be disposed adjacent to the duct 234. The gear housing 237 may be formed at the side bracket 233. The gear housing 237 may have the form of a cylinder which is blind at the bottom. The gear housing 237 may include a housing opening 238. The housing opening 238 may be formed in the inner side of the gear housing 237. The inner gear 211G of the drive rim 211 may be exposed to the inner side of the gear housing 237 through the housing opening 238. A shaft hole h may be formed in the bottom of the gear housing 237.

The drive gear 251 may be positioned in the gear housing 237. A frictional disc 252 may be positioned between the bottom of the gear housing 237 and the drive gear 251. For example, the frictional disc 252 may be a washer. The drive gear 251 may rotate about the shaft hole h in the gear housing 237. The rotating shaft of the motor 250 may be inserted into the shaft hole h in the gear housing 237 through the drive gear 251. The motor 250 may rotate the drive gear 251. The drive gear 251 may be engaged with the inner gear 211G of the drive rim 211 in the gear housing 237. Upon rotation of the drive gear 251 by the motor 250, the drive rim 211 may be rotated.

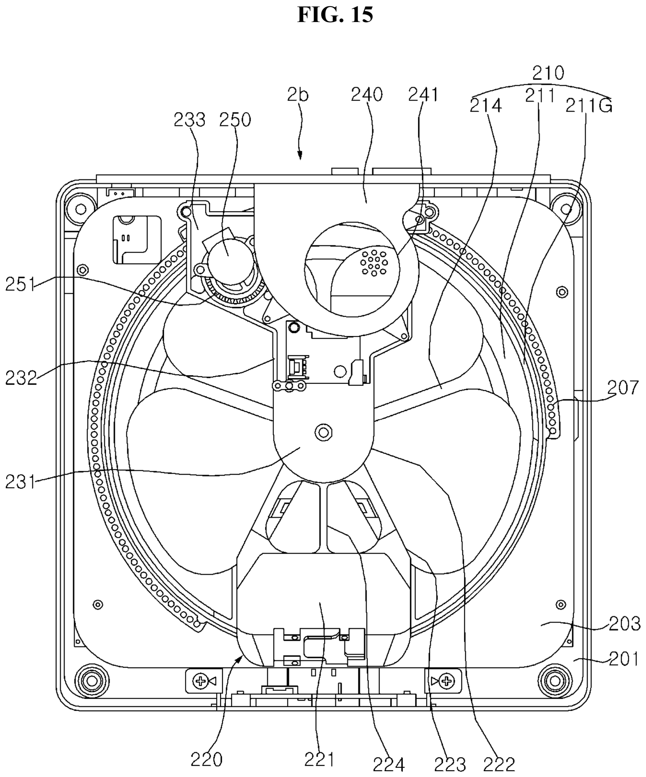

Referring to FIGs. 15 to 17, a cooling fan 240 may be positioned above the duct 234 (see FIG. 14). For example, the cooling fan 240 may be a sirocco fan. An inlet 241 of the cooling fan 240 may be aligned with the duct 234 and/or the opening 203d (see FIG. 7) in the third plate 203 (see FIG. 7).

When the motor 250 rotates the drive gear 251, the drive rim 211 may be rotated about the hub cover 231 by means of the inner gear 211G of the drive rim 211 engaged with the drive gear 251. When the drive rim 211 is rotated, the antenna mount 220 may be rotated together with the drive rim 211.

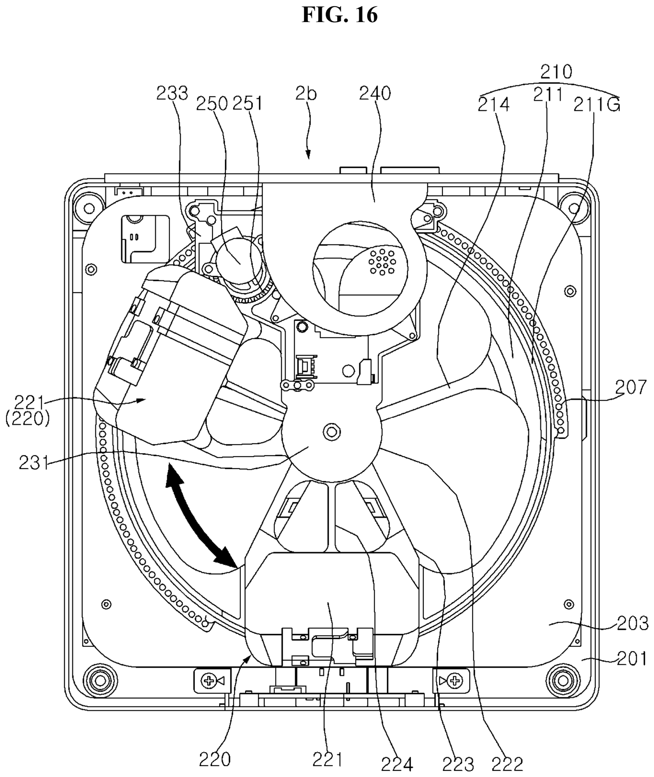

Referring to FIG. 16, when the drive gear 251 is rotated clockwise by the motor 250, the drive rim 211 may be rotated clockwise. The mount head 221 may be moved from the 6 o'clock direction to the 10 o'clock direction. When the driver gear 251 is rotated counterclockwise by the motor 250, the drive rim 211 may be rotated counterclockwise. The mount head 221 may be moved from the 10 o'clock direction to the 6 o'clock direction.

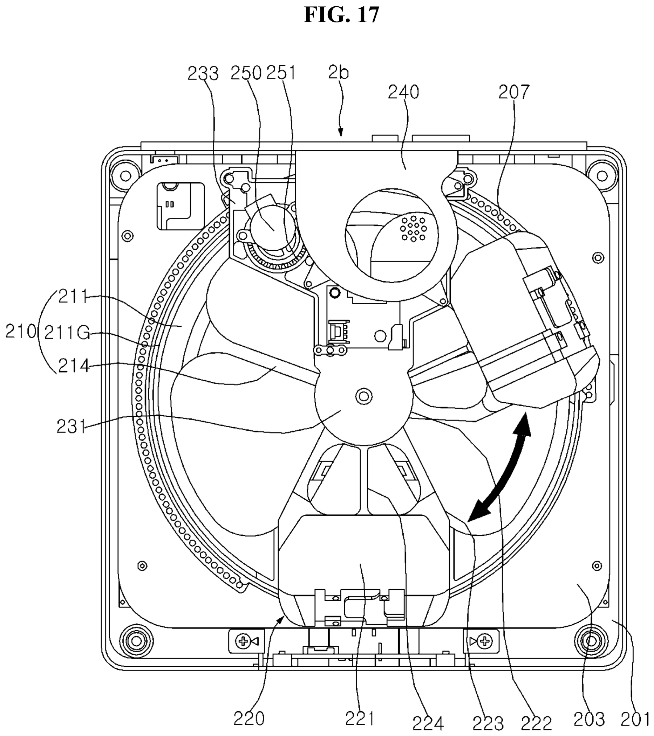

Referring to FIG. 17, when the drive gear 251 is rotated counterclockwise by the motor 250, the drive rim 211 may be rotated counterclockwise. When the drive gear 251 is rotated clockwise by the motor 211, the drive rim 211 may be rotated clockwise. The mount head 221 may be moved from the from 2 o'clock direction to the 6 o'clock direction.

As a result, the mount head 221 is capable of rotating in order to obtain directionality in which transmitting and receiving sensitivity of the antenna is improved.

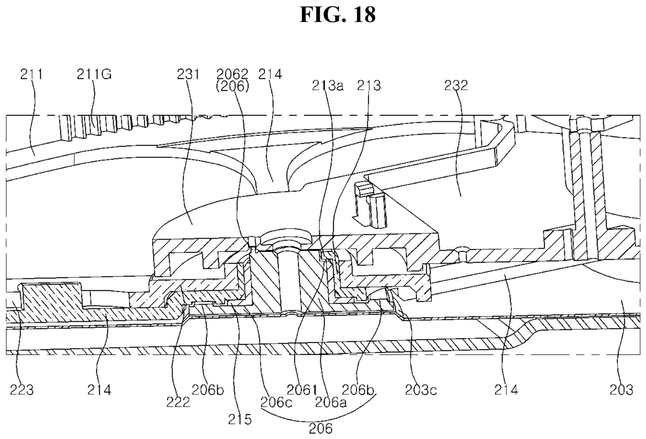

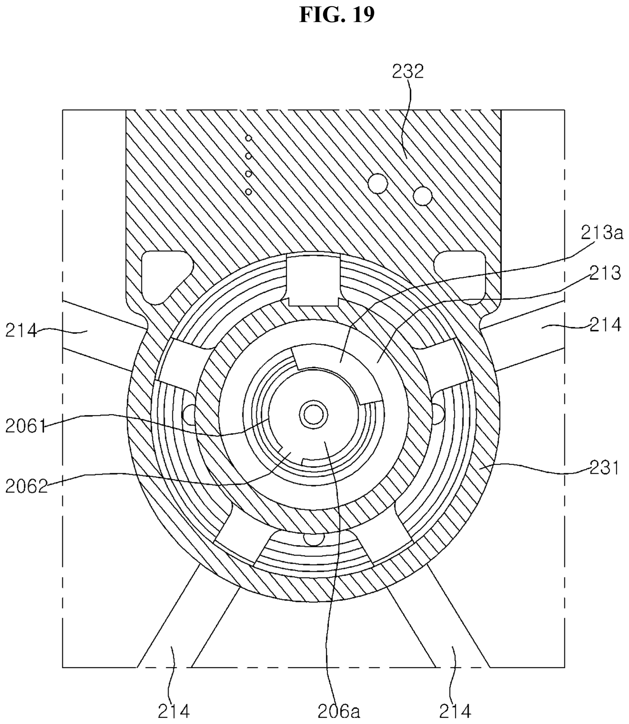

Referring to FIGs. 18 and 19, the pole fixer 206a of the center pole 206 may have the form of a cylinder. The center pole 206 may include a stopper 2062 and a hub guide 2061. The hub guide 2061 may be formed at the edge of the upper end of the pole fixer 206a. The hub guide 2061 may be formed by removing the edge of the upper end of the pole fixer 206a. The hub guide 2061 may have a height difference at the periphery of the upper end of the pole fixer 206a. The hub guide 2061 may have the form of a circle which is partially open. The stopper 2062 may be positioned between the two ends of the hub guide 2061. The stopper 2062 may be formed at the periphery of the upper end of the pole fixer 206a, or may project upwards from the edge of the upper end of the pole fixer 206a. The stopper 2062 may be inserted into the hub cover 231.

The hub 213 of the wheel 210 (see FIG. 9) may cover the outer circumferential surface of the pole fixer 206a. The hub 213 may include a rotating tab 213a positioned at the hub guide 2061. When the wheel 210 (see FIG. 9) is rotated, the rotating tab 213a may be moved within the hub guide 2061. The rotating tab 213a may have an arc shape. For example, the rotational angle of the wheel 210 (see FIG. 9) may be 230 degrees. The center pole 206 and the hub 213 may collectively be referred to as a limiter 206 and 213.

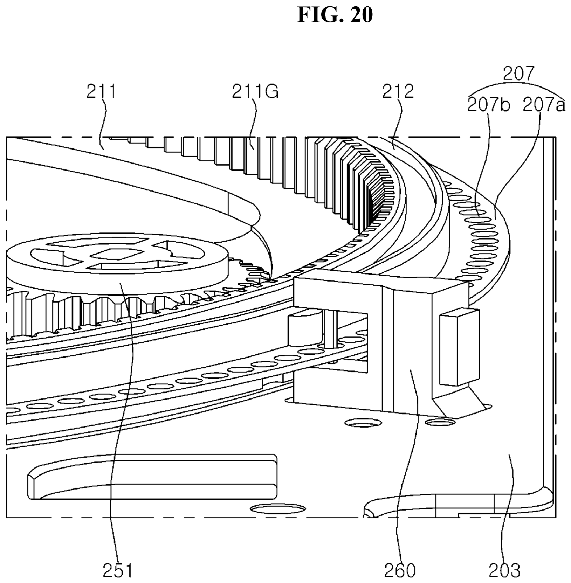

Referring to FIG. 20, a counter sensor 260 may be disposed adjacent to the drive rim 211 and/or the flange support 212. The counter sensor 260 may be mounted on the third plate 203. The counter sensor 260 may detect movement of the holes 207b in the rotational indicator 207. For example, the counter sensor 260 may be an optical sensor. Consequently, it is possible to monitor the rotational angle of the wheel 210 (see FIGs. 15 to 17).

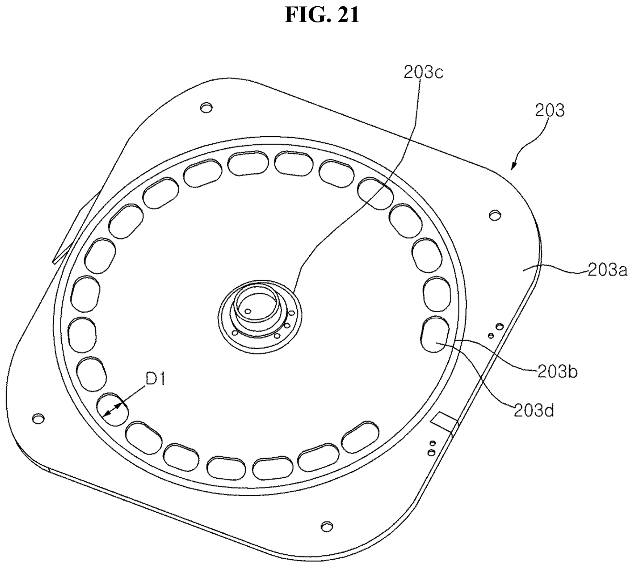

Referring to FIG. 21, the third plate 203 may include a plurality of openings 203d. The plurality of openings 203d may be positioned between the outer rim 203b and the stage 203c. The plurality of openings 203d may be positioned closer to the outer rim 203b than to the stage 203c. The plurality of openings 203d may be sequentially arranged along the periphery of the outer rim 203b. The plurality of openings 203d may be formed through the base 230a of the third plate 203. For example, the plurality of openings 203d may be arranged in a C shape along the outer rim 203b.

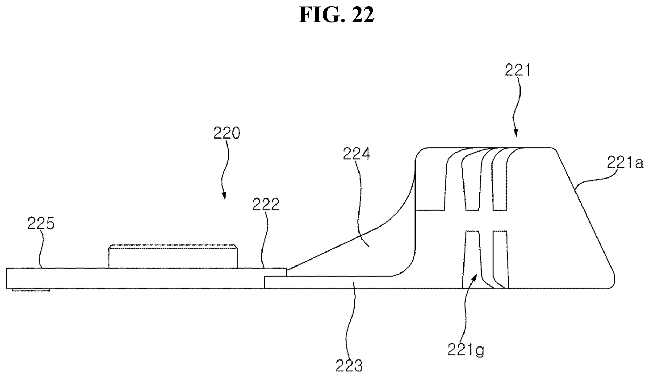

Referring to FIGs. 22 to 25, the mount head 221 may include the front part 221a and/or the radiator part 221g. The radiator part 221g may include a plurality of fins F. The plurality of fins F may be referred to as radiator fins F or radiator plates F. The front part 221a may define the front surface of the mount head 221. The front part 221a may have a predetermined thickness. The front part 221a may include a front surface and a rear surface. The plurality of fins F may be formed on the rear surface of the front part 221a. The plurality of fins F may extend from the rear surface of the front part 221a. The plurality of fins F may be spaced apart from each other.

The bridge 223 may be connected to the plurality of fins F. The center support 224 may form a wall with respect to the bridge 223. The center support 224 may be connected to one of the plurality of fins F. The plurality of fins F may form a wall with respect to the bridge 223. The plurality of fins F may be positioned parallel to each other, and may be spaced apart from each other so as to define a gap G therebetween.

The mount hub 222 may be connected to the bridge 223. The mount hub 222 may be positioned opposite the mount head 221 based on the bridge 223. The mount hub 222 may have the form of a circular ring plate.

A rear weight 225 may be connected to the mount hub 222. The rear weight 225 may be referred to as a balancer 225 or a weight plate 225. The rear weight 225 may extend from the mount hub 222. The rear weight 225 may be formed integrally with the mount hub 222. For example, the rear weight 225 may have the form of a fan. A fastening hole BH may be formed in the rear weight 225.

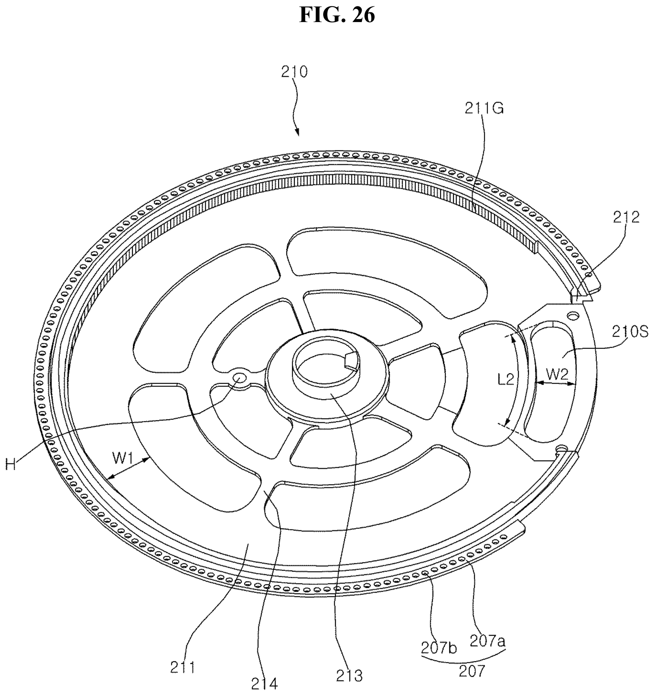

Referring to FIG. 26, the wheel 210 may include the drive rim 211. The drive rim 211 may have the form of a circular ring plate. The drive rim 211 may be connected to the hub 213 via the spoke 214. The driver rim 211 may have a predetermined width W1. The width W1 of the drive rim 211 may be the distance between the flange support 212 or the inner gear 211G and the inner periphery of the drive rim 211. The driver rim 211 may cover the plurality of openings 203d in the third plate 203 (see FIG. 21).

The wheel 210 may include a slot opening 210s. The slot opening 210s may be formed through the drive rim 211. The width W2 of the slot opening 210s may be less than the width W1 of the drive rim 211. The length L2 of the slot opening 210s may be greater than the width W2 of the slot opening 210s. For example, the slot opening 210s may have an arc shape.

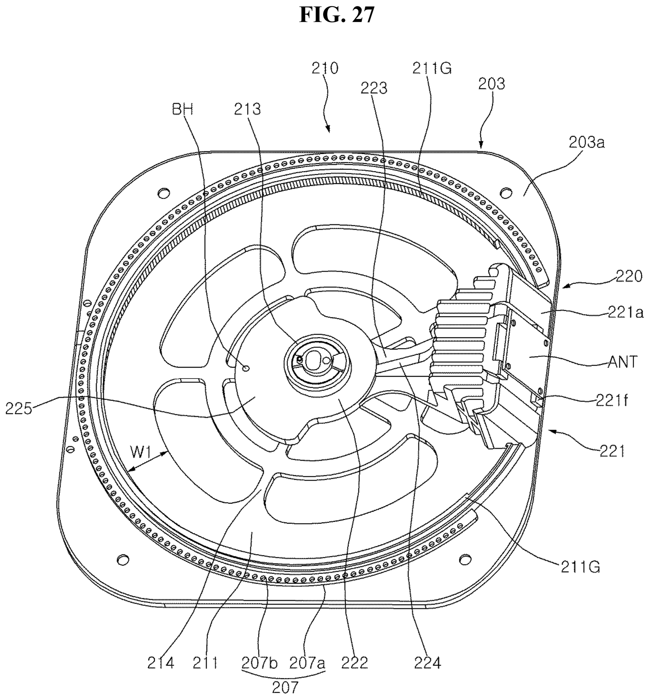

Referring to FIGs. 27 to 29, the mount head 221 of the antenna mount 220 may be positioned on the drive rim 211 of the wheel 210. The mount head 221 may be positioned above the slot opening 210s formed in the drive rim 211. The mount head 221 may cover the slot opening 210s. The mount head 221 may be exposed toward the lower surface of the third plate 203 through the slot opening 210s in the wheel 210 and/or the openings 203d in the third plate 203.

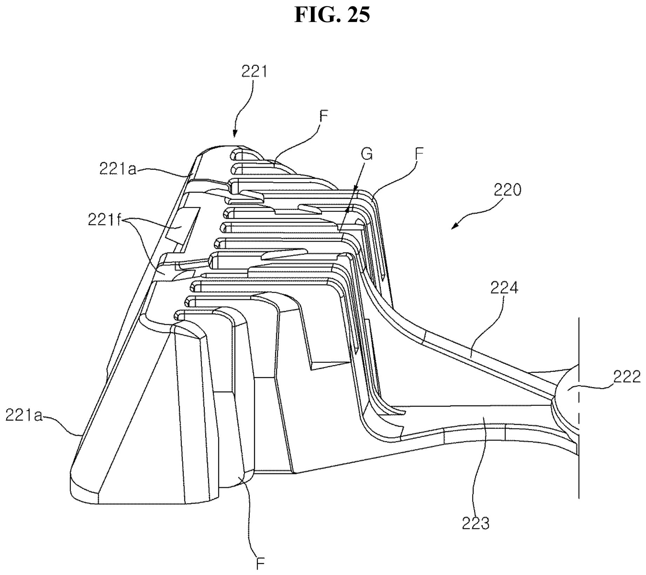

The air flowing under the third plate 203 may pass between the fins F (see FIG. 25) of the mount head 221 through the plurality of openings 203d in the third plate 203 and/or the slot opening 210s in the wheel 210. Consequently, it is possible to improved heat dissipation of the mount head 221 and/or the antennal ANT mount on the mount head 221.

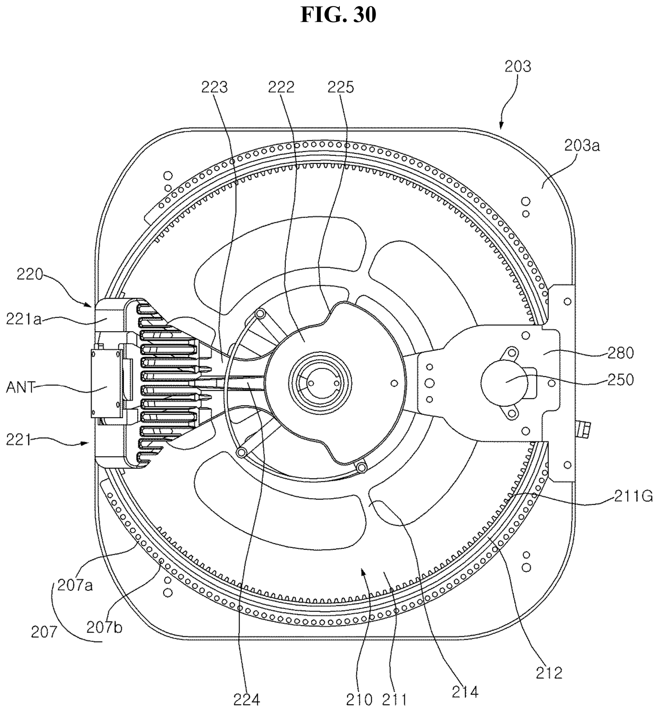

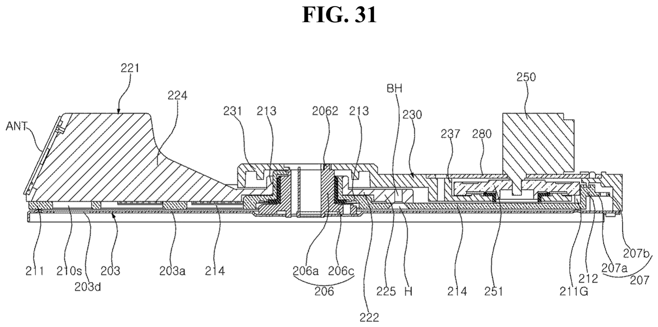

Referring to FIGs. 30 and 31, the drive gear 251 may be rotated in the gear housing 237. The motor 250 may rotate the drive gear 251. The driver gear 251 may be engaged with the inner gear 211G. The gear cover 280 may cover the drive gear 251, and may be coupled to the gear housing 237. The motor 250 may be positioned opposite the drive gear 251 based on the gear cover 280. The hub cover 231 may cover the center pole 206, or may support the upper side of the center pole 206.

The rear weight 225 of the antenna mount 220 may be fixed to the spoke 214 of the wheel 210. The rear weight 225 may be fixed to the spoke 214 of the wheel 210 by inserting a fastening element into the fastening hole BH in the rear weight 225 and the fastening hole H (see FIG. 26) in the spoke 214. Consequently, it is possible to improve stability of balance of the antenna mount 220 during rotation of the wheel 210 and/or the antenna mount 220.

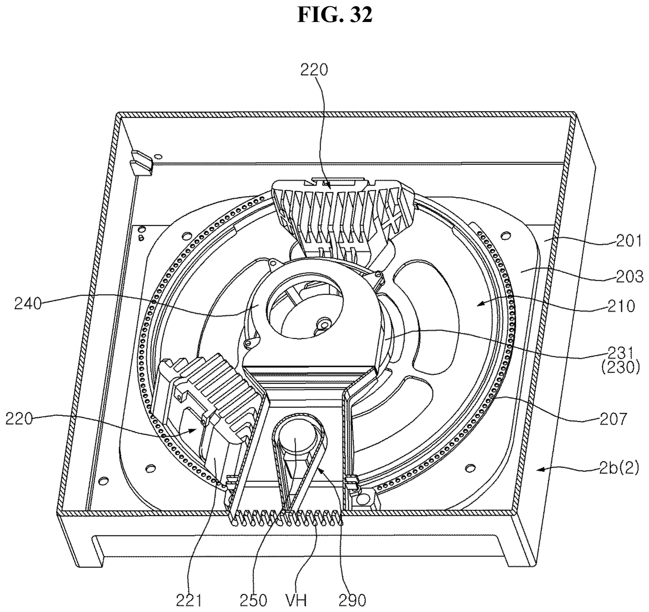

Referring to FIGs. 32 to 34, the cooling fan 240 may be positioned above the center pole 206 (see FIG. 31) and/or the hub cover 231. A discharge duct 290 may connect the cooling fan 240 to the upper case 2a. The discharge duct 290 may connect the cooling fan 240 to the lower case 2b. The discharge duct 290 may allow the inside of the control box 2 to communicate with the outside of the control box. The discharge duct 290 may serve as a passage through which the heat in the control box 2 is discharged to the outside of the control box 2. The cooling fan 240 may discharge the heat in the control box 2 to the outside of the control box 2 through the discharge duct 290.

The discharge duct 290 may include a first side wall 291, a second side wall 292, a center wall 293 and/or an upper plate 294. The under plate 294 may cover a portion of the wheel 210. The under plate 294 may include a motor hole 294h. The motor 250 may be positioned in the motor hole 294h. The center wall 293 may be positioned around the motor 250. The center wall 293 may form a wall with respect to the under plate 294 at the boundary of the motor hole 294h. The center hole 293 may have a streamline shape. For example, the center wall 293 may have a teardrop-shaped cross-section. The center wall 293 may include a head portion 293a and a tail portion 293b. The head portion may face the cooling fan 240. For example, the head portion 293a may have the form of a cylinder. The tail portion 293b may connect the head portion 293a to the upper case 2a or the lower case 2b. For example, the tail portion 293b may have the form of a wedge. The motor 250 may be positioned in the space defined by the head portion 293a and the tail portion 293b of the center wall 293.

The first side wall 291 may extend toward the inner surface of the upper case 2a or the lower case 2b from the cooling fan 240. The second side wall 292 may extend toward the inner surface of the upper case 20a or a lower case 2b from the cooling fan 240. The second side wall 292 may face the first side wall 291. The motor hole 294h in the under plate 294 and the center wall 293 may be positioned between the first side wall 291 and the second side wall 292.

The first side wall 291 may include a first converging portion 291a and a first flaring portion 291b. The first converging portion 291a may be disposed adjacent to the cooling fan 240. The first flaring portion 291b may extend from the first converging portion 291a, and may be positioned between the first converging portion 291a and the inner surfaces of the upper and lower cases 2a and 2b. The boundary between the first converging portion 291a and the first flaring portion 291b may be depressed toward the center wall 293.

The second side wall 292 may include a second converging portion 292a and a second flaring portion 292b. The second converging portion 292a may be disposed adjacent to the cooling fan 240. The second flaring portion 292b may extend from the second converging portion 292a, and may be positioned between the second converging portion 292a and the inner surfaces of the upper and lower cases 2a and 2b. The boundary of the second converging portion 292a and the second flaring portion 292b may be depressed toward the center wall 293. The mount head 221 of the antenna mount 220 may be supported by the outer surfaces of the first and second converging portions 291a and 292a and the outer surfaces of the first and second flaring portions 291b and 292b. Consequently, the mount head 221 of the antenna mount 220 may be rotated within the rotational angle, which is described with reference to FIGs. 16 and 17.

By virtue of the first converging portion 291a of the first side wall 291 and the second converging portion 292a of the side wall 292, the flow path for air introduced from the cooling fan 240 (the plan section of the flow path defined between the first side wall 291 and the second side wall 292) may be narrowed in a discharge direction of air flow. By virtue of the first flaring portion 291b of the first side wall 291 and the second flaring portion 292b of the second side wall 292, the flow path for the air having passed through the first converging portion 291a and the second converging portion 292a (the plan section of the flow path defined between the side wall 291 and the second side wall 292) may be widened in the discharge direction of air flow. For example, the first side wall 291 and the second side wall 292 may have an hourglass shape overall.

The under plate 294 may include an inflow portion 294a, a flow portion 294b, and an outflow portion 294c. The inflow portion 294a may be positioned adjacent to the cooling fan 240, and may be connected to the cooling fan 240. The inflow portion 294a may connect the lower end of the first converging portion 291a of the first side wall 291 to the lower end of the second converging portion 292a of the second side wall 292. The outflow portion 294c may be disposed adjacent to the inner surface of the upper case 2a or the inner surface of the lower case 2b, and may be connected to the inner surface of the control box 2. The outflow portion 294c may overlap the tail portion 293b of the center wall 293. The outflow portion 294c may connect the lower end of the first flaring portion 291b of the first side wall 291 to the lower end of the second flaring portion 292b of the second side wall 292. The outflow portion 294c may be connected to the lower end of the tail portion 293b of the center wall 293. The flow portion 294b may be positioned between the first flaring portion 291b of the first side wall 291 and the second flaring portion 292b of the second side wall 292. The flow portion 294b may overlap the head portion 293a of the center wall 293. The boundary between the inflow portion 294a and the flow portion 294b may be aligned with the boundary between the first and second converging portions 291a and 292a and the first and second flaring portions 291b and 292b. The flow portion 294b may be depressed toward the wheel 210 from the discharge duct 290. The flow portion 294b may have the form of a pipe which is depressed so as to be concave. The depth to which the flow portion 294b is depressed may be inversely proportional to the area of the flow path which is defined by the first and second converging portions 291a and 292a and is gradually narrowed. Therefore, it is possible to constantly maintain the flow rate of air which flows toward the outflow portion 294c from the inflow portion 294a through the flow portion 294b. Furthermore, it is possible to reduce the resistance to air which flows toward the outflow portion 294c from the inflow portion 294a through the flow portion 294b.

A discharge vent VH may be formed in the upper case 2a or the lower case 2b. The discharge vent VH may be positioned between the first flaring portion 291b of the first side wall 291 and the second flaring portion 292b of the second side wall 292. The outflow portion 294c of the under plate 294 may be aligned with the lower end of the discharge vent VH, and may be coupled to the control box 2.

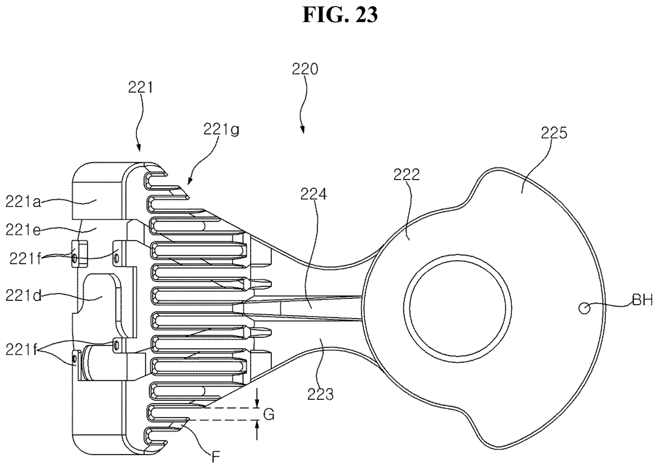

Referring to FIGs. 27 to 30 and FIGs. 32 to 34, the air, which has been introduced through the opening 203d in the third plate 203, may receive the heat from the mount head 221 while passing through the plurality of fins F (see FIG. 23) of the mount head 221. The air having passed through the plurality of fins F of the mount head 221 may be discharged to the outside of the control box 2 through the discharge duct 290 by means of the cooling fan 240. Accordingly, it is possible to efficiently cool the heat from the antenna ANT and/or the mount head 221.

Referring to FIGs. 1 to 34, the control box may include a case, a plate disposed in the case, a wheel comprising an inner gear and rotatably mounted on the plate, an antenna mount including an antenna and fixed to the wheel so as to be rotated together with the wheel, and a motor comprising a drive gear engaged with the inner gear of the wheel, wherein the antenna mount comprising a mount head which comprises at least one fin and to which the antenna is mounted, wherein the plate comprising a plurality of openings which are formed through the plate and arranged at the mount head, and wherein the wheel comprises a slot opening which is disposed between the plurality of openings and the mount head and is aligned with at least one of the plurality of openings in the plate.

The antenna mount may include a front part on which the antenna is mounted and a radiator part comprising at least one fin and connected to the front part, and the plurality of openings in the plate may be aligned with the radiator part of the mount head.

The plate may further include a stage provided with a rotational center for the antenna mount and an outer rim disposed below the antenna mount and defining a periphery of a circle around the stage serving as a center of the circle, and the plurality of openings in the plate may be positioned between the stage and the outer rim, closer to the outer rim than to the stage and may be sequentially arranged along the outer rim.

The wheel may further include a drive rim aligned with the outer rim, a hub aligned with the stage, and a spoke connecting the hub to the drive rim, wherein the drive rim of the wheel covers the plurality of openings in the plate, and wherein the slot opening in the wheel is aligned with some of the plurality of openings in the plate.

The antenna mount may further include a mount hub coupled to the hub of the wheel, and a bridge connecting the mount head to the mount hub, and the at least one fin may be disposed between the bridge and the antenna, and form a wall with respect to the bridge.

The antenna mount may further include a rear weight positioned opposite the bridge based on the mount hub and connected to the mount hub.

The control box may further include a cooling fan disposed adjacent to a center of the wheel, a discharge vent formed in a side surface of the case, and a discharge duct connecting the cooling fan to the discharge vent, and the motor may overlap the discharge duct in a direction of a rotational center axis of the wheel.

The discharge duct may include an under plate connecting the cooling fan to the discharge vent, a first side wall forming a wall on the under plate and connecting the cooling fan to the discharge vent, and a second side wall facing the first side wall, forming a wall on the under plate, and connecting the cooling fan to the discharge vent.

The discharge duct may further include a center wall which is positioned between the first side wall and the second side wall and through which the motor extends.

The center wall may surround the motor.

The first side wall may include a first converging portion extending toward the center wall from the cooling fan and a first flaring extending toward the discharge vent in the case from the first converging portion, and the second side wall may include a second converging portion extending toward the center wall from the cooling fan and a second flaring portion extending toward the discharge vent in the case from the second converging portion, wherein the first and second converging portions define a flow path which is gradually narrowed toward the center wall, and wherein the first and second flaring portions define a flow path which is gradually widened toward the discharge vent in the case.

The under plate may include an inflow portion connected to the cooling fan, an outflow portion connected to the discharge vent in the case, and a flow portion connecting the inflow portion to the outflow portion, wherein the flow portion is depressed toward the wheel.

The center wall may include a head portion facing the cooling fan and a tail portion facing the discharge vent in the case, wherein the head portion has a form of a pipe having a semi-circular section, and the tail portion has a form of a wedge.

The slot opening in the wheel may extend long, and the slot opening in the wheel may have a length greater than a width of the slot opening in the wheel.

Furthermore, the display device may include a display head comprising a display panel configured to display an image and a communication module and a control box comprising an antenna configured to perform wireless communication with the communication module, wherein the control box includes a case, a plate disposed in the case, a wheel including an inner gear and rotatably mounted on the plate, an antenna mount to which the antenna is mounted and which is fixed to the wheel so as to be rotated together with the wheel, and a motor comprising a drive gear engaged with the inner gear of the wheel, wherein the antenna mount comprising a mount head which comprises at least one fin and to which the antenna is mounted, wherein the plate comprising a plurality of openings which are formed through the plate and arranged at the mount head, and wherein the wheel comprises a slot opening which is disposed between the plurality of openings and the mount head and is aligned with at least one of the plurality of openings in the plate.

The antenna mount may include a front part on which the antenna is mounted and a radiator part comprising at least one fin and connected to the front part, and the plurality of openings in the plate may be aligned with the radiator part of the mount head.

The plate may further include a stage provided with a rotational center for the antenna mount and an outer rim disposed below the antenna mount and defining a periphery of a circle around the stage serving as a center of the circle, and the plurality of openings in the plate may be positioned closer to the outer rim than to the stage between the stage and the outer rim and may be sequentially arranged along the outer rim.

The wheel may further include a drive rim aligned with the outer rim, a hub aligned with the stage, and a spoke connecting the hub to the drive rim, wherein the drive rim of the wheel covers the plurality of openings in the plate, and the slot opening in the wheel may be aligned with some of the plurality of openings in the plate.

The antenna mount may further include a mount hub coupled to the hub of the wheel and a bridge connecting the mount head to the mount hub, and the at least one fin may be disposed between the bridge and the antenna and may form a wall with respect to the bridge.

The control box may further include a cooling fan disposed adjacent to a center of the wheel, a discharge vent formed in a side surface of the case, and a discharge duct connecting the cooling fan to the discharge vent, and the motor may overlap the discharge duct in a direction of a rotational center axis of the wheel.

The effects of the control box and the display device including the control box according to the present disclosure will be described.

The effects of the control box and the display device including the control box according to the present disclosure will be described.

According to at least one embodiment of the present disclosure, it is possible to provide a control box including a wireless communication module.

According to at least one embodiment of the present disclosure, it is possible to provide a control box capable of automatically adjusting direction of the wireless communication module.

According to at least one embodiment of the present disclosure, it is possible to provide a control box capable of improving reception rate of the antenna of the wireless communication module.

According to at least one embodiment of the present disclosure, it is possible to provide a mechanism for rotation of the wireless communication module.

According to at least one embodiment of the present disclosure, it is possible to provide a mechanism configured to limit rotational range of the wireless communication module.

According to at least one embodiment of the present disclosure, it is possible to provide a control box configured to improve radiation efficiency of the wireless communication module.

According to at least one embodiment of the present disclosure, it is possible to efficiently improve an air flow structure in the control box.

According to at least one embodiment of the present disclosure, it is possible to improve drive stability of a rotating mechanism of the wireless communication module.

The additional scope of applicability of the present disclosure will be apparent from the above detailed description. However, those skilled in the art will appreciate that various modifications and alterations are possible, without departing from the idea and scope of the present disclosure, and therefore it should be understood that the detailed description and specific embodiments, such as the preferred embodiments of the present disclosure, are provided only for illustration.

Certain embodiments or other embodiments of the disclosure described above are not mutually exclusive or distinct from each other. Any or all elements of the embodiments of the disclosure described above may be combined with each other in configuration or function.

For example, a configuration "A" described in one embodiment of the disclosure and the drawings and a configuration "B" described in another embodiment of the disclosure and the drawings may be combined with each other. That is, even if the combination of the configurations is not explicitly described, the combination is possible except in the case where it is stated that the combination is impossible.

Although embodiments have been described with reference to a number of illustrative embodiments thereof, it should be understood that numerous other modifications and embodiments that fall within the scope of the principles of this disclosure can be devised by those skilled in the art. More particularly, various variations and modifications are possible in the component parts and/or arrangements within the scope of the disclosure, the drawings and the appended claims. In addition to variations and modifications in the component parts and/or arrangements, alternative uses will also be apparent to those skilled in the art.

## Claims

1. A control box comprising:
a case;
a plate disposed in the case;
a wheel comprising an inner gear and rotatably mounted on the plate;
an antenna mount comprising an antenna and fixed to the wheel so as to be rotated together with the wheel; and
a motor comprising a drive gear engaged with the inner gear of the wheel,
wherein the antenna mount comprising a mount head which comprises at least one fin and to which the antenna is mounted,
wherein the plate comprising a plurality of openings which are formed through the plate and arranged at the mount head, and
wherein the wheel comprises a slot opening which is disposed between the plurality of openings and the mount head and is aligned with at least one of the plurality of openings in the plate.

2. The control box according to claim 1, wherein the mount head comprises:
a front part on which the antenna is mounted; and
a radiator part comprising at least one fin and connected to the front part, and
wherein the plurality of openings in the plate are aligned with the radiator part of the mount head.

3. The control box according to claim 1 or 2, wherein the plate further comprises:
a stage provided with a rotational center for the antenna mount; and
an outer rim disposed below the antenna mount and defining a periphery of a circle around the stage serving as a center of the circle, and
wherein the plurality of openings in the plate are positioned between the stage and the outer rim, closer to the outer rim than to the stage and are sequentially arranged along the outer rim.

4. The control box according to claim 3, wherein the wheel further comprises:
a drive rim aligned with the outer rim;
a hub aligned with the stage; and
a spoke connecting the hub to the drive rim,
wherein the drive rim of the wheel covers the plurality of openings in the plate, and
wherein the slot opening in the wheel is aligned with some of the plurality of openings in the plate; wherein, optionally, the antenna mount further comprises:
a mount hub coupled to the hub of the wheel; and
a bridge connecting the mount head to the mount hub, and
wherein the at least one fin is disposed between the bridge and the antenna, and forms a wall with respect to the bridge; wherein, further optionally, the antenna mount further comprises a rear weight positioned opposite the bridge based on the mount hub and connected to the mount hub.

5. The control box according to any one of claims 1 to 4, further comprising:
a cooling fan disposed adjacent to a center of the wheel;
a discharge vent formed in a side surface of the case; and
a discharge duct connecting the cooling fan to the discharge vent, and
wherein the motor overlaps the discharge duct in a direction of a rotational center axis of the wheel.

6. The control box according to claim 5, wherein the discharge duct comprises:
an under plate connecting the cooling fan to the discharge vent;
a first side wall forming a wall on the under plate and connecting the cooling fan to the discharge vent; and
a second side wall facing the first side wall, forming a wall on the under plate, and connecting the cooling fan to the discharge vent.

7. The control box according to claim 6, wherein the discharge duct further comprises a center wall which is positioned between the first side wall and the second side wall and through which the motor extends.

8. The control box according to claim 7, wherein {i} the center wall surrounds the motor and/or {ii} the first side wall comprises:
a first converging portion extending toward the center wall from the cooling fan; and
a first flaring extending toward the discharge vent in the case from the first converging portion,
wherein the second side wall comprises:
a second converging portion extending toward the center wall from the cooling fan; and
a second flaring portion extending toward the discharge vent in the case from the second converging portion,
wherein the first and second converging portions define a flow path which is gradually narrowed toward the center wall, and
wherein the first and second flaring portions define a flow path which is gradually widened toward the discharge vent in the case.

9. The control box according to any one of claims 6 to 8, wherein the under plate comprises:
an inflow portion connected to the cooling fan;
an outflow portion connected to the discharge vent in the case; and
a flow portion connecting the inflow portion to the outflow portion,
wherein the flow portion is depressed toward the wheel.

10. The control box according to claim 7 or 8, or of claim 9 as far as depending on claim 7, wherein the center wall comprises:
a head portion facing the cooling fan; and
a tail portion facing the discharge vent in the case,
wherein the head portion has a form of a pipe having a semi-circular section, and the tail portion has a form of a wedge.

11. The control box according to any one of claims 1 to 10, wherein the slot opening in the wheel extends long and/or wherein the slot opening in the wheel has a length greater than a width of the slot opening in the wheel.

12. A display device comprising:
a display head comprising a display panel configured to display an image and a communication module; and
a control box (e.g., as defined in any one of claims 1 to 11) comprising an antenna configured to perform wireless communication with the communication module,
wherein the control box comprises:
a case;
a plate disposed in the case;
a wheel comprising an inner gear and rotatably mounted on the plate;
an antenna mount to which the antenna is mounted and which is fixed to the wheel so as to be rotated together with the wheel; and
a motor comprising a drive gear engaged with the inner gear of the wheel,
wherein the antenna mount comprising a mount head which comprises at least one fin and to which the antenna is mounted,
wherein the plate comprising a plurality of openings which are formed through the plate and arranged at the mount head, and
wherein the wheel comprises a slot opening which is disposed between the plurality of openings and the mount head and is aligned with at least one of the plurality of openings in the plate.

13. The display device or control box according to claim 12, wherein the mount head comprises:
a front part on which the antenna is mounted; and
a radiator part comprising at least one fin and connected to the front part, and
wherein the plurality of openings in the plate are aligned with the radiator part of the mount head.

14. The display device or control box according to claim 12 or 13, wherein the plate further comprises:
a stage provided with a rotational center for the antenna mount; and
an outer rim disposed below the antenna mount and defining a periphery of a circle around the stage serving as a center of the circle, and
wherein the plurality of openings in the plate are positioned closer to the outer rim than to the stage between the stage and the outer rim, and are sequentially arranged along the outer rim; wherein, optionally, the wheel further comprises:
a drive rim aligned with the outer rim;
a hub aligned with the stage; and
a spoke connecting the hub to the drive rim,
wherein the drive rim of the wheel covers the plurality of openings in the plate, and
wherein the slot opening in the wheel is aligned with at least one of the plurality of openings in the plate; wherein, further optionally, the antenna mount further comprises:
a mount hub coupled to the hub of the wheel; and
a bridge connecting the mount head to the mount hub, and
wherein the at least one fin is disposed between the bridge and the antenna, and forms a wall with respect to the bridge.

15. The display device or control box according to any one of claims 12 to 14, further comprising:
a cooling fan disposed adjacent to a center of the wheel;
a discharge vent formed in a side surface of the case; and
a discharge duct connecting the cooling fan to the discharge vent, and
wherein the motor overlaps the discharge duct in a direction of a rotational center axis of the wheel.
